# EUROPEAN PATENT APPLICATION

(11) **EP 3 282 604 A1**
(43) Date of publication of application: **14.02.2018**
(21) Application number: 16776621.1
(22) Date of filing: 07.04.2016
(51) Int. Cl.: H04B 17/00, G05B 23/02, G06F 11/30, H04B 1/74

(54) **INTEGRATED MONITORING CONTROL DEVICE AND INTEGRATED MONITORING CONTROL SYSTEM**

(30) Priority: 07.04.2015 JP 2015078132
(71) Applicant: Mitsubishi Electric Corporation, Chiyoda-ku Tokyo 100-8310 (JP)
(72) Inventor: IGAWA, Satoru, Tokyo 100-8310 (JP)
(74) Representative: Lavoix
(86) International application number: PCT/JP2016/061387
(87) International publication number: WO 2016/163455

(57) **Abstract**

An integrated monitoring/control device includes a processing correspondence definer (650) to define, for a category ID included in a state information item indicating a state of monitoring/control devices (20a, 30a, 40a), devices (20a, 30a, 40a) monitored by the monitoring/control devices, an integrated monitoring/control device (60a), and another integrated monitoring/control device (60b), category ID-corresponding processing that is processing executed using the state information item, a receiver (611) to receive the state information item transmitted by the monitoring/control devices (20a, 30a, 40a), a state information item transmitter (640) to transmit the state information item managed by the integrated monitoring/control device (60a) to the other integrated monitoring/control device (60b), a state information item receiver (612) to receive the state information item transmitted by the other integrated monitoring/control device (60b) and managed by the other integrated monitoring/control device (60b), and a processing controller (660) to perform control so that the category ID-corresponding processing is executed on the state information item.

## Description

### Technical Field

The present disclosure relates to an integrated monitoring/control device and an integrated monitoring/control system in which multiple monitoring/control devices configured by computers or the like are connected via a network such as a LAN or WAN and state information items received from the monitoring/control devices are collectively processed.

### Background Art

As an example of a large-scale control system, a satellite control ground system that is a control system on the ground side for monitoring/controlling a satellite has to monitor whether various devices, such as a device for transmitting/receiving radio waves to/from the satellite, a device for controlling the antenna, and the like are normally operating using monitoring/control devices and execute controls depending on the situation using the monitoring/control devices. Many monitoring/control devices are installed depending on various devices to monitor the situation and execute necessary controls. Moreover, in order to integrate information items of the dispersed monitoring/control devices so as to know the situation of a satellite or the ground system controlling the satellite, a dedicated computer for executing proper controls is installed as an integrated monitoring/control device to execute processing for the entire satellite control ground system. Examples of such processing include acquiring an event that is the occurrence of a failure and/or a current state information item through data communication via a network and then displaying the acquired event and/or the current state information item on a monitor.

Moreover, a monitoring/control system that is not allowed to stop operating has to continue the system operation even if some device has a failure. Thus, such a monitoring/control system includes multiple sub-monitoring/control systems having the same function and is configured to be able to continue the operation using another subsystem even if one subsystem has a failure. Integrated monitoring/control devices used in such a sub-monitoring/control system have to mutually exchange state information items that enable grasping of the states of both of the sub-monitoring/control systems in the individual sub-monitoring/control systems constituting a redundant system so as to minimize the stoppage of the function while the systems are switched.

In a control system having the above configuration, the integrated monitoring/control device is required to have functions including acquiring the state information items of the monitoring/control devices, checking the state information items, and displaying a screen, and the like. Furthermore, a configuration allowing multiple operators in charge of different tasks to use these functions is required. Therefore, it is desirable that the state information items are customized and provided in a different format for each operator. However, in consideration of cooperation of the operators, it is required that the state information items should be consistent and unified even if different operators receive individual state information items customized in different formats. Furthermore, capability of dealing with equipment change such as replacement and addition of devices due to failure, functional expansion, functional change, or the like is required. Attempts to develop a control system meeting all the above requirements lead to significant load on the system development. In order to facilitate the system development, techniques of configuring an integrated monitoring/control system that can acquire information items regarding the states of many monitoring/control devices of different kinds and provide unified and consistent state information items that are each in a format meeting various requirements are necessary.

As a solution to the above problem, for example, Unexamined Japanese Patent Application Kokai Publication No. 2004-334576, FIG. 1 (see Patent Literature 1) describes an integrated monitoring/control device that executes various kinds of processing on acquired state information items of different kinds in which acquired electronic information items are grouped and processed under rules different by group.

Moreover, Japanese Patent No. 5077826, FIG. 1 (see Patent Literature 2) describes an integrated monitoring/control device that executes various kinds of processing on acquired state information items of different kinds in which correspondence between plant data and software for processing the plant data. Upon selection of the plant date, corresponding software is extracted.

### Citation List

### Patent Literature

Patent Literature 1: Unexamined Japanese Patent Application Kokai Publication No. 2004-334576 (FIG. 1); and
Patent Literature 2: Japanese Patent No. 5077826 (FIG. 1).

### Summary of Invention

### Technical Problem

According to the disclosure in Patent Literature 1, the integrated monitoring/control device classifies acquired electronic information items into groups and processes the electronic information items under rules different by group. However, the classification of electronic information is ruled only within the integrated monitoring/control device. This results in a problem in that multiple integrated monitoring/control devices cannot apply the same classification to individual information items received from the monitoring/control devices shared by multiple integrated monitoring/control devices, and thus cannot flexibly compose processing on each information item.

According to the disclosure in Patent Literature 2, correspondence between the plant data and the software for processing the plant data is defined. For processing plant data, registered software corresponding to the plant data is selected. To extract the software, all target plant data have to be preregistered at the integrated monitoring/control device, and this cannot be applied to information items regarding the states of many monitoring/control devices of different kinds handled by the integrated monitoring/control device.

The present disclosure has been made for solving the above technical problems and an objective of the disclosure is to obtain an integrated monitoring/control device and an integrated monitoring/control system capable of easily performing processing in a form corresponding to requirements for each of state information items of monitoring/control devices including state information items of monitoring/control devices managed by another station in a system that performs monitoring/control using monitoring/control devices of multiple stations.

### Solution to Problem

The integrated monitoring/control device according to the present disclosure is an integrated monitoring/control device for monitoring/controlling multiple monitoring/control devices, comprising a processing correspondence definer to define, for a category ID included in a state information item indicating a state of the monitoring/control devices, devices monitored by the monitoring/control devices, the integrated monitoring/control device, and another integrated monitoring/control device different from the integrated monitoring/control device, category ID-corresponding processing that is processing executed using the state information item; a receiver to receive the state information item transmitted by the monitoring/control devices; a state information item transmitter to transmit the state information item managed by the integrated monitoring/control device to the other integrated monitoring/control device; a state information item receiver to receive the state information item transmitted by the other integrated monitoring/control device and managed by the other integrated monitoring/control device; and a processing controller to perform control so that the processing defined by the processing correspondence definer for the category ID included in the state information item is executed for the state information item.

The integrated monitoring/control system according to the present disclosure is an integrated monitoring/control system comprising multiple monitoring/control devices and multiple integrated monitoring/control devices for monitoring/controlling the multiple monitoring/control devices, wherein the multiple monitoring/control devices are to generate a state information item indicating a state of a device to be monitored or their own state and including a category ID and transmit the generated state information item to the integrated monitoring/control devices, and the multiple integrated monitoring/control devices include a processing correspondence definer to define, for a category ID included in a state information item indicating a state of any of the monitoring/control devices, devices monitored by the monitoring/control devices, and the integrated monitoring/control device of its own station or another station, category ID-corresponding processing that is processing executed using the state information item; a receiver to receive the state information item from the monitoring/control devices; a state information item transmitter to transmit the state information item managed by the integrated monitoring/control device of its own station to the integrated monitoring/control device of the other station; a state information item receiver to receive the state information item transmitted by the integrated monitoring/control device of the other station and managed by the integrated monitoring/control device of the other station; and a processing controller to perform control so that the state information item of the processing defined by the processing correspondence definer for the category ID included in the state information item.

### Advantageous Effects of Invention

The present disclosure provides an integrated monitoring/control device and an integrated monitoring/control system that can easily perform processing in a form corresponding to requirements for each state information item of monitoring/control devices including state information of monitoring/control devices managed by another station.

### Brief Description of Drawings

FIG. 1 is a conceptual diagram illustrating operation of a satellite control ground system that is an example of an integrated monitoring/control system according to Embodiment 1 of the present disclosure;
FIG. 2 is a diagram illustrating a configuration of the integrated monitoring/control system according to Embodiment 1 of the present disclosure;
FIG. 3 is a diagram illustrating a configuration of the integrated monitoring/control system according to Embodiment 1 of the present disclosure when an integrated monitoring/control device has a failure;
FIG. 4 illustrates an example of a state information item of the integrated monitoring/control system according to Embodiment 1 of the present disclosure;
FIG. 5 illustrates a structure of a category ID added to the state information item of the integrated monitoring/control system according to Embodiment 1 of the present disclosure;
FIG. 6 illustrates an example of lists of state information items and category IDs added to the state information items of the integrated monitoring/control system according to Embodiment 1 of the present disclosure;
FIGS. 7A and 7B each illustrate an example of a monitoring screen for the integrated monitoring/control system according to the present disclosure to provide state information items;
FIG. 8 is a diagram illustrating a configuration of a monitoring/control device according to Embodiment 1 of the present disclosure;
FIG. 9 is a diagram illustrating a configuration of a display terminal of the integrated monitoring/control system according to Embodiment 1 of the present disclosure;
FIG. 10 is a flowchart illustrating the operation of the display terminal of the integrated monitoring/control system according to Embodiment 1 of the present disclosure;
FIG. 11 is a diagram illustrating a configuration of an integrated monitoring/control device according to Embodiment 1 of the present disclosure;
FIGS. 12A and 12B are diagrams each illustrating an example of a hardware configuration of the monitoring/control device and the integrated monitoring/control device according to Embodiment 1 of the present disclosure;
FIG. 13 is a diagram illustrating a configuration of an integrated monitoring/control device of an operation station according to Embodiment 2 of the present disclosure;
FIG. 14 is a diagram illustrating a configuration of an integrated monitoring/control device of a backup station according to Embodiment 2 of the present disclosure;
FIG. 15 is a flowchart illustrating operation of a screen/sound output notifier of the integrated monitoring/control device according to Embodiment 2 of the present disclosure;
FIG. 16 is a diagram illustrating a configuration of an integrated monitoring/control device according to Embodiment 3 of the present disclosure;
FIG. 17 is a diagram illustrating a configuration of an integrated monitoring/control system according to Embodiment 4 of the present disclosure; and
FIG. 18 is a diagram illustrating a configuration of an integrated monitoring/control device according to Embodiment 4 of the present disclosure.

### Description of Embodiments

### Embodiment 1

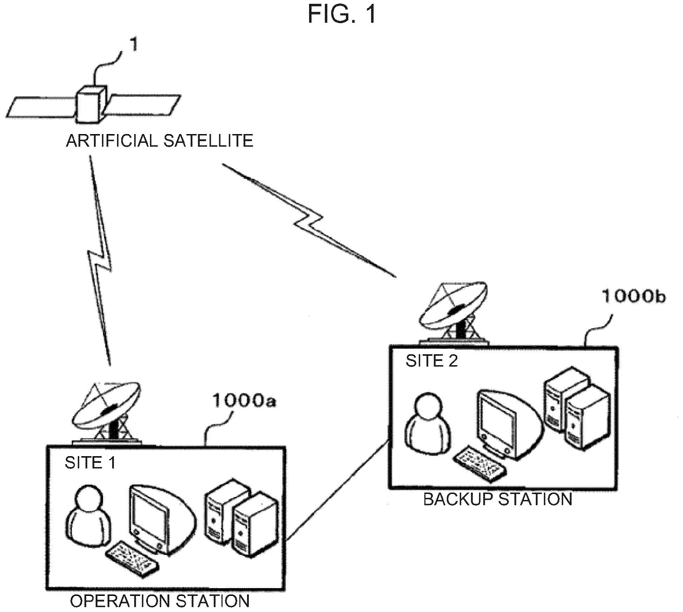

FIG. 1 is a conceptual diagram illustrating operation of a satellite control ground system that is an example of an integrated monitoring/control system according to Embodiment 1 of the present disclosure. In FIG. 1, the reference number 1 denotes a man-made satellite to be controlled, and an operation station 1000a and a backup station 1000b are each a ground station that communicates with the man-made satellite 1 and performs management such as monitoring, control, and the like of the state of the man-made satellite 1. In control systems that are not allowed to stop operating as represented by, for example, control of man-made satellites, multiple geographically distant ground stations configured by various devices connected by a network are provided for controlling the same control target. As just stated, with multiple ground stations being provided, any of the ground stations can continue to perform monitoring/control even if a large-scale disaster, social infrastructure failure, or the like occurs. The operation station 1000a monitors and controls the control target during normal operation. The backup station 1000b does not control the control target and only monitors the control target, similar to the operation station 1000a during normal operation. When control by the operation station 1000a is disabled, the backup station 1000b controls the control target instead of the operation station 1000a. The operation station 1000a and the backup station 1000b are connected to each other. In Embodiment 1 of the present disclosure, the operation station 1000a is also referred to as one station (its own station) and the backup station 1000b is also referred to as another station (the other station). Moreover, when the backup station 1000b is switched to operate as the operation station and the operation station 1000a is switched to operate as the backup station, the backup station 1000b takes the position of one station (its own station) and the operation station 1000a takes the position of another station (the other station).

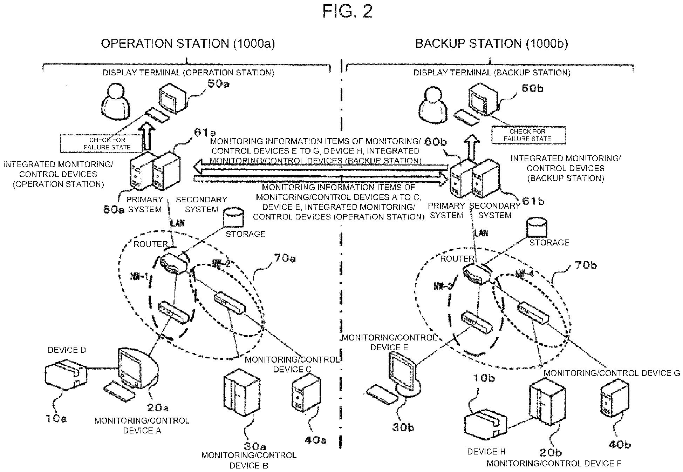

FIG. 2 is a diagram illustrating a configuration of the integrated monitoring system according to Embodiment 1 of the present disclosure. A state information item indicating the status and the like of a device constituting a monitoring/control system 1000a that is the operation station is transmitted to integrated monitoring/control devices (60a, 61a). The integrated monitoring/control device 60a is referred to as a primary system and the integrated monitoring/control device 61a is referred to as a secondary system. With the primary system and the secondary system, the monitoring/control system 1000a that is the operation station has a further redundant configuration. Similarly, a state information item indicating the status and the like of a device constituting the backup station 1000b is transmitted to integrated monitoring/control devices (60b, 61b). The integrated monitoring/control device 60b is referred to as a primary system and the integrated monitoring/control device 61b is referred to as a secondary system. With the primary system and the secondary system, a monitoring/control system 1000b that is the backup station has a further redundant configuration. Of the primary system and the secondary system, the system executing monitoring/control is referred to as a running system and the other system is referred to as a standby system. The standby system is in the state of being ready for immediately operating as the running system when the running system has a failure. However, the standby system only receives and stores the state information items transmitted by the monitoring devices, and does not process the state information items. Data generated by the running system through processing are saved also in a corresponding storage region of the standby system. The following description will be made on the assumption that the primary system is the running system.

The operation station 1000a includes, for example as illustrated in FIG. 2, a device 10a, a monitoring/control device 20a, a monitoring/control device 30a, a monitoring/control device 40a, a primary system integrated monitoring/control device 60a, a secondary system integrated monitoring/control device 61a, and a display terminal 50a, which are connected by a network 70a. The device 10a is a device to be monitored and controlled such as a communication device, and is monitored and controlled by the monitoring/control device 20a. Although not illustrated, the monitoring/control device 30a and the monitoring/control device 40a each monitor and control a device as the monitoring/control device 20a does. The monitoring/control device 20a, the monitoring/control device 30a, and the monitoring/control device 40a each transmit a state information item indicating the status and the like of a device they monitor and control as well as a state information item indicating the status and the like of the monitoring/control device itself to the primary system integrated monitoring/control device 60a and the secondary system integrated monitoring/control device 61a via the network 70a. The display terminal 50a is connected to the primary system integrated monitoring/control device 60a or the secondary system integrated monitoring/control device 61a, displays state information items received by the connected integrated monitoring/control device (60a or 61a) via the network, and receives control input from the operator. Here, when the display terminal 50a is connected to the secondary system integrated monitoring/control device 61a, the operator cannot perform control.

The primary system integrated monitoring/control device 60a and the secondary system integrated monitoring/control device 61a receive and store the same state information items from all monitoring/control devices (20a, 30a, 40a) on the network 70a so that the display terminal 50a can continue to display the state information items even if the connection destination is switched from the primary system integrated monitoring/control device 60a to the secondary system integrated monitoring/control device 61a and vice versa.

Specifically, the monitoring/control device 20a, the monitoring/control device 30a, and the monitoring/control device 40a transmit the same state information item indicating the status and the like to the primary system integrated monitoring/control device 60a and the secondary system integrated monitoring/control device 61a. Furthermore, the primary system integrated monitoring/control device 60a and the secondary system integrated monitoring/control device 61a each also store the state information item indicating their own status and the like in addition to state information items of the monitoring/control device 20a, the monitoring/control device 30a, the monitoring/control device 40a, and the like, and transmit, mutually between the integrated monitoring/control devices. The state information item of the primary system integrated monitoring/control device 60a is transmitted to the secondary system integrated monitoring/control device 61a, and the state information item of the secondary system integrated monitoring/control device 61a is transmitted to the primary system integrated monitoring/control device 60a. The state information items of the integrated monitoring/control devices (60a, 61a) each include an operation state indicating whether its own station is the operation station 1000a executing controls on the monitoring/control devices (20a, 30a, 40a), a control state indicating whether the integrated monitoring/control device (60a, 61a) is the running system or the standby system, and a running state indicating whether the integrated monitoring/control device (60a, 61a) is operating normally. The state information items of the integrated monitoring/control devices (60a, 61a) may each include other kinds of information items.

The backup station 1000b has a configuration similar to that of the operation station 1000a and includes, for example as illustrated in FIG. 2, a device 10b, a monitoring/control device 20b, a monitoring/control device 30b, a monitoring/control device 40b, a primary system integrated monitoring/control device 60b, a secondary system integrated monitoring/control device 61b, and a display terminal 50b, which are connected by a network 70b. Although not illustrated, the monitoring/control device 20b, the monitoring/control device 30b, and the monitoring/control device 40b each transmit a state information item of a device they monitor and control and the monitoring/control device itself to the primary system integrated monitoring/control device 60b and the secondary system integrated monitoring/control device 61b via the network 70b. The display terminal 50b is connected to the primary system integrated monitoring/control device 60b or the secondary system integrated monitoring/control device 61b, displays the state information items received by the connected integrated monitoring/control device (60b or 61b) via the network, and receives control input from the operator. The backup station 1000b cannot execute controls to send instructions to the satellite. Moreover, when the display terminal 50b is connected to the secondary system integrated monitoring/control device 61a, the operator cannot perform control.

The primary system integrated monitoring/control device 60b and the secondary system integrated monitoring/control device 61b receive and store the same state information item from all monitoring/control devices and the integrated monitoring/control devices on the network 70b. This enables the display terminal 50a to continue to display the state information items even if the connection destination is switched from the primary system integrated monitoring/control device 60a to the secondary system integrated monitoring/control device 61a and vice versa.

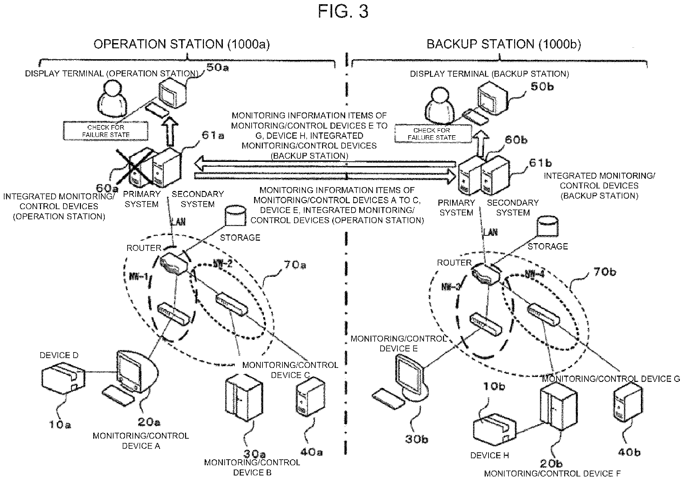

FIGS. 2 illustrates the state of the integrated monitoring/control system during normal operation, and FIG. 3 illustrates the state of the integrated monitoring/control system during the occurrence of a failure in the primary system integrated monitoring/control device 60a of the operation station. During normal operation, as illustrated in FIG. 2, the display terminal 50a is connected to the primary system integrated monitoring/control device 60a and displays the state information items received from the primary system integrated monitoring/control device 60a. When the primary system integrated monitoring/control device 60a has a failure, the secondary system that was the standby system turns into the running system and as illustrated in FIG. 3, the display terminal 50a is connected to the secondary system integrated monitoring/control device 61a. The primary system and the secondary system of the backup station similarly operate when the primary system that is the running system has a failure.

In the case of monitoring/control systems such as the operation station 1000a and the backup station 1000b that constitute a multiplexed system, the continuity of control has to be assured before and after control is switched from the operation station 1000a to the backup station 1000b or from the backup station 1000b to the operation station 1000a. To do so, the operator of the operation station 1000a monitors not only the state information item mainly managed by the operation station 1000a but also the state information item mainly managed by the backup station 1000b on the display terminal 50a of the operation station 1000a. Moreover, the operator of the backup station 1000b monitors not only the state information item mainly managed by the backup station 1000b but also the state information item mainly managed by the operation station 1000a on the display terminal 50b of the backup station 1000b. Therefore, the integrated monitoring/control devices (60a, 61a) of the operation station 1000a and the integrated monitoring/control devices (60b, 61b) of the backup station 1000b are mutually connected by a network or the like that is established for the link between the operation station 1000a and the backup station 1000b and is different from the network 70a within the operation station 1000a and the network 70b within the backup station 1000b.

To mutually monitor the state information items in the operation station 1000a and the backup station 1000b, the primary system integrated monitoring/control device 60a of the operation station 1000a transmits the acquired state information item of the operation station 1000a to the primary system integrated monitoring/control device 60b and the secondary system integrated monitoring/control device 61b of the backup station 1000b. Moreover, the primary system integrated monitoring/control device 60b of the backup station 1000b transmits the acquired state information item of the backup station 1000b to the primary system integrated monitoring/control device 60a and the secondary system integrated monitoring/control device 61a of the operation station 1000a. In this way, the primary system integrated monitoring/control device 60a of the operation station and the backup station share the state information item of the operation station 1000a and the state information item of the backup station 1000b. The secondary system integrated monitoring/control device 61a that is the standby system of the operation station may transmit the state information item of the operation station 1000a. Moreover, the secondary system integrated monitoring/control device 61b that is the standby system of the backup station may transmit the state information item of the backup station 1000b.

The configurations illustrated in FIGS. 2 and 3 are presented only by way of example. In this integrated monitoring/control system, any number and any kind of monitoring/control devices that monitors/controls any number and any kind of devices are connected to the primary system integrated monitoring/control device 60a (60b) and the secondary system integrated monitoring/control device 61a (61b) by a network and each transmit state information items. Moreover, the number of integrated monitoring/control devices receiving state information items is not limited to two, that is, the primary system integrated monitoring/control device 60a (60b) and the secondary system integrated monitoring/control device 61a (61b), and any number of integrated monitoring/control devices may be used depending on operational requirements.

Moreover, FIGS. 2 and 3 each illustrate an example where the network 70a is an internal network of the operation station 1000a and is established by connecting, using a router, a network (NW-1) to which the monitoring/control device 20a is connected, a network (NW-2) to which the monitoring/control device 30a and the monitoring/control device 40a are connected, and a network (LAN) to which the primary system integrated monitoring/control device 60a and the secondary system integrated monitoring/control device 61a are connected. This is a non-limiting example, and another network configuration may be used as long as the individual monitoring/control devices (20a, 30a, 40a), the primary system integrated monitoring/control device 60a, and the secondary system integrated monitoring/control device 61a are mutually connected. The same applies to the network 70b that is an internal network of the backup station 1000b, and another network configuration may be used as long as the individual monitoring/control devices (20b, 30b, 40b), the primary system integrated monitoring/control device 60b, and the secondary system integrated monitoring/control device 61b are connected.

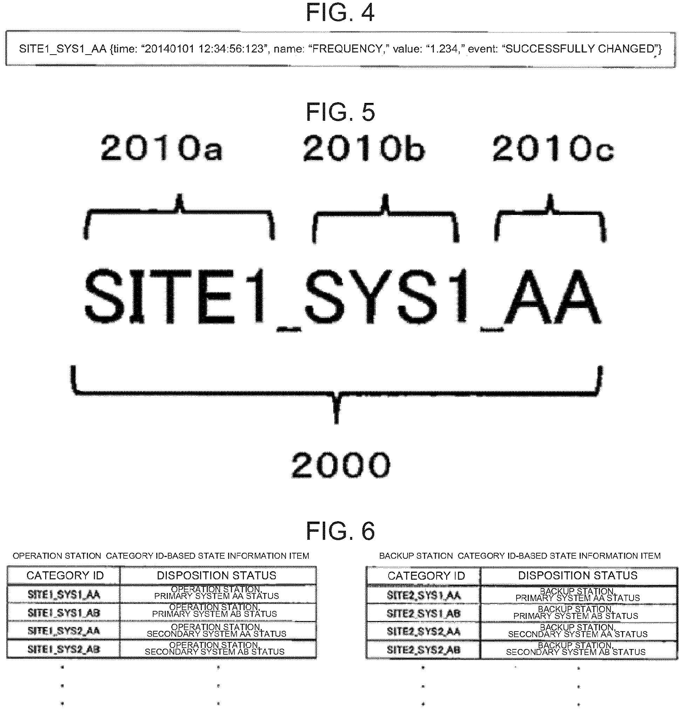

FIG. 4 illustrates a format of a state information item transmitted by the individual monitoring/control devices (20a, 30a, 40a) and the integrated monitoring/control devices of the backup station 1000b to the integrated monitoring/control devices of the operation station 1000a. State information items are classified into categories based on the type of information required by the operator and are each transmitted along with an ID indicating the classification (hereafter, the category ID). In FIG. 4, a character string within brackets is a state information item indicating the status and the like of an individual device or a monitoring/control device, and "SITE1_SYS1_AA" outside the brackets is a category ID that specifies the classification of the state information item.

The "time:," "name:," "value:," and "event:", within brackets each represent the type of data provided to and included in a state information item that is classified into a category specified by the category ID "STTE1_SYS1_AA." The segment, "20140101 12:34:56:123", is data indicating a particular time for "time:." The "FREQUENCY" is data for "name:." The segment, "1.234", is data for "value:." The message, "SUCCESSFULLY TRANSMITTED", is data for "event:." In other words, FIG. 4 illustrates a state information item that is classified into a category specified by the category ID "SITE1_SYS1_AA" and involves data indicating the occurrence of an event in which the data having a "FREQUENCY" of "1.234" has been "SUCCESSFULLY TRANSMITTED" at the time of "20140101 12:34:56:123."

FIG. 5 illustrates an example of a structure of a category ID to be transmitted along with a state information item. The category ID, "SITE1_SYS1_AA" (2000), includes "SITE1" (a hierarchy level 1 (2010a)), "SYS1" (a hierarchy level 2 (2010b)), and "AA" (a hierarchy level 3 (2010c)). The hierarchy level 1, the hierarchy level 2, the hierarchy level 3, and the like are each referred to as a hierarchy level ID and each represent an attribute of the state information item to be transmitted classified based on the type of the information item, the purpose of the information item, and the like. With the hierarchy level IDs being concatenated from the top hierarchy level, the category ID has an attribute of new subdivided classification including the attributes of multiple classes at a time. The category ID "SITE1_SYS1_AA" (2000) illustrated in the example of FIG. 5 is a concatenation of attributes of three hierarchy levels, "SITE1" (2010a), "SYS1" (2010b), and "AA" (2010c), and means that a state information item having this category ID has multiple attributes of the hierarchy level 1, the hierarchy level 2, and the hierarchy level 3. FIG. 5 illustrates an example of the category ID defined by concatenating three hierarchy level IDs. In general, however, any number of hierarchy level IDs may be concatenated to create a category ID as long as the number is one or more.

For the state information item having the category ID (2000) illustrated in FIG. 5, the integrated monitoring/control devices (the primary system integrated monitoring/control devices (60a, 60b) and the secondary system integrated monitoring/control devices (61a, 61b)) define, for each category ID (2000), processing to provide the state information item such as display of the state information item, alarm by the state information item, tabulation of the state information item, and the like. In doing so, individually different processing may be defined for each category ID (2000). Moreover, category IDs may also be classified by the attribute of one of the hierarchy levels (the hierarchy level 1 (2010a), the hierarchy level 2 (2010b), the hierarchy level 3 (2010c)) included in each category ID (2000), and then corresponding processing may be defined for state information items having the classified category IDs. In such a case, the processing is defined for state information items having respective category IDs each including the hierarchy level ID of the same attribute (examples of such category IDs (2000) include "SITE1_SYS1_AA," "STTE2_SYS1_AA," "SITE1_SYS2_AA," and the like each including the hierarchy level ID (2010c) of the hierarchy level 3, "AA").

Category IDs may be classified by the attributes of multiple hierarchy level IDs included in each category ID (2000), and corresponding processing may be defined for state information items having the classified category IDs. In such a case, the integrated monitoring/control devices (the primary system integrated monitoring/control devices (60a, 60b) and the secondary system integrated monitoring/control devices (61a, 61b)) define processing for state information items having respective category IDs (2000) each including the specific hierarchy level IDs of the specific attributes (examples of such category IDs (2000) include "SITE1_SYS1_AA," "SITE1_SYS1_AB," "SITE1_SYS1_BB," and the like each including a combination of the hierarchy level ID (2010a) of the hierarchy level 1 and the hierarchy level ID (2010b) of the hierarchy level 2, "SITE1_SYS_1"). Furthermore, the same processing may be defined for multiple category IDs, such as "SITE2_SYS1_AA," "SITE1_SYS2_AB," and the like, independent of whether or not the same hierarchy level ID is included.

FIG. 6 illustrates examples of a list of state information items and category IDs included in the state information items transmitted to the integrated monitoring/control devices of the operation station 1000a and the backup station 1000b. In the examples illustrated in FIG. 6, the state information items have respective category IDs that are each created by concatenating the hierarchy level 1 (classification by distinction as to whether the integrated monitoring/control device that receives the state information belongs to the operation station or the backup station), the hierarchy level 2 (classification by distinction as to whether the integrated monitoring/control device that receives the state information item is the primary system or the secondary system), and the hierarchy level 3 (classification by the device to be monitored and controlled), the state information items being classified based on such category IDs, according to the configuration of the monitoring/control system in FIG. 2. With such category IDs, the state information items can efficiently be classified using structural classification such as the position on the network, distinction between the operation station and the backup station, distinction between the primary system and the secondary system, the device to be monitored and controlled, and the like.

Additionally, for the hierarchy level ID, any classification, including classification based on an information item required by the same operator, classification based on an information item relating to a specific operation, and classification regarding maintenance and adjustment of a device, may be employed. For example, in regard to the state information item of "AA" indicated by the category ID "SITE1_SYS1_AA," when "AA" includes two components "AA1" and "AA2" and "AA1" and "AA2" have to be referred to in separate situations, the hierarchy level ID of the hierarchy level 4 may further be added to the category ID included in the state information item to change the category ID to "SITE1_SYS1_AA_AA1" and "SITE1_SYS1_AA_AA2." The category IDs changed as above are added to the state information items to be transmitted by the monitoring/control device, and the integrated monitoring/control devices define, for each of the category IDs "SITE1_SYS1_AA_AA1" and "SITE1_SYS1_AA_AA2," different processing for providing the state information item. With the category ID having the structure as described above, even when the configuration of the integrated monitoring/control system is changed in part, classification of the state information items can flexibly be modified simply by changing, only in the part subjected to change in configuration, a category ID to be included in a state information item to be transmitted by a monitoring/control device to the integrated monitoring/control devices or generated within the integrated monitoring/control devices.

Moreover, for example for the same "AA," it is possible to handle the case in which the configuration becomes different between the operation stations due to replacement of a piece of equipment or the like. For example, when "AA" for the operation station 1000 includes the components "AA1" and "AA2" and "AA" for the backup station 1000b includes the components "AA3" and "AA4," a category ID including "SITE1" that represents the classification of the operation station 1000a and a category ID "SITE2" that represents the classification of the backup station 1000b may be changed so as to further subdivide the configuration of "AA" into "SITE1_SYS1_AA_AA1" and "SITE1_SYS1_AA_AA2" for the operation station 1000a, and "SITE2_SYS1_AA_AA3" and "SITE2_SYS1_AA_AA4" for the backup station 1000b, for monitoring and controlling. When changes are made so that the information items are classified using new category IDs, the monitoring/control devices and the integrated monitoring/control devices have only to change the category ID to be included in the state information item as well as the processing to be executed for the category ID.

As examples of the above "AA," "AA1," "AA2," and the like, for example, it is assumed that the operation station 1000a is a Tokyo station located in Tokyo and the backup station 1000b is an Osaka station located in Osaka. The Tokyo station and the Osaka station each include two integrated monitoring/control devices named MAIN and SUB. In such a case, the MAIN corresponds to the primary system integrated monitoring/control device (60a, 60b) and the SUB corresponds to the secondary system integrated monitoring/control device (61a, 61b). In such a case, the Tokyo station and the Osaka station are each equipped with machinery such as a communication device (COM) that transmits state information items to the integrated monitoring/control device MAIN and the integrated monitoring/control device SUB. The category IDs of such state information items are expressed by "TOKYO_MAIN_COM," "TOKYO_SUB_COM," OSAKA_MAIN_COM," and the like. In this example, AA is "COM." Moreover, when the communication device (COM) in the Tokyo station includes a transmission device (TX) and a reception device (RX), the category IDs of the state information items transmitted by the communication device (COM) in the Tokyo station are "TOKYO_MAIN_COM_TX" and "TOKYO_MAIN_COM_RX." In this example, AA1 is "TX" and AA2 is "RX." Furthermore, when the communication device (COM) in the Osaka station includes a wireless device (RF) and a baseband device (BB), the category IDs of state information items transmitted by the communication device (COM) in the Osaka station are expressed by "OSAKA_MAIN_COM_RF," "OSAKA_MAIN_COM_BB," and the like. In this example, AA1 is "RF" and AA2 is "BB."

The integrated monitoring/control devices (the primary system integrated monitoring/control devices (60a, 60b) and the secondary system integrated monitoring/control devices (61a, 61b)) define, for respective category IDs having the above-described structure, processing to be executed for state information items having the respective the category IDs.

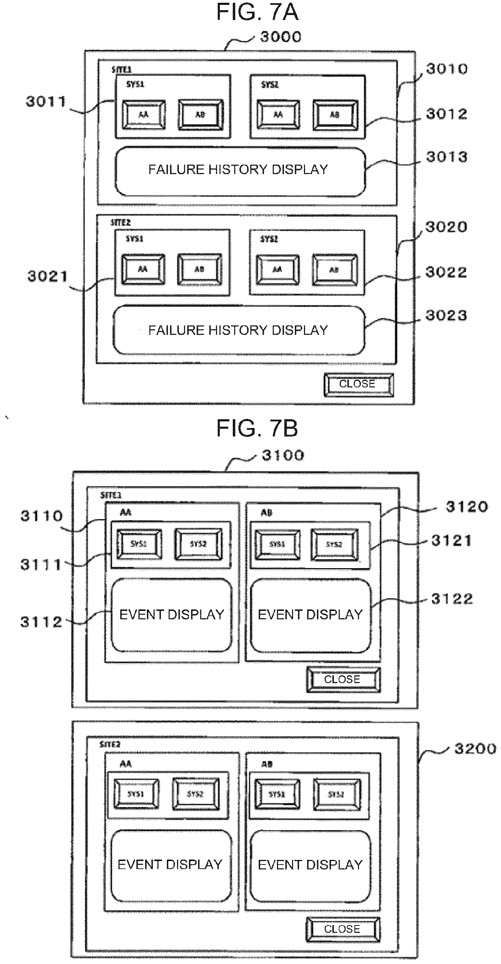

FIGS. 7A and 7B illustrate examples of results of processing defined by the integrated monitoring/control devices (the primary system integrated monitoring/control devices (60a, 60b) and the secondary system integrated monitoring/control devices (61a, 61b)) based on the state information items having the category IDs of the structure as illustrated in FIG. 6. That is, FIGS. 7A and 7B each illustrate an example of a screen for checking the status of the operation station 1000a and the backup station 1000b. Since state information items each have a category ID created by concatenating the hierarchy level 1 (classification by distinction between the operation station and the backup station), the hierarchy level 2 (classification by distinction as to whether the integrated monitoring/control device that receives the state information item is the primary system or the secondary system), and the hierarchy level 3 (classification by the device to be monitored and controlled), the state information items can be displayed separately for the running system (the primary system) and for the standby system (the secondary system) of each ground station (the operation station 1000a or the backup station 1000b) as illustrated in FIG. 7A, or can be displayed for each device to be monitored and controlled as illustrated in FIG. 7B.

For example, assuming a case in which the state of the entire system including the operation station 1000a and the backup station 1000b will be checked, state information items for the entire system including the operation station 1000a and the backup station 1000b are displayed on a single monitoring screen 3000, as illustrated in FIG. 7A. Furthermore, state information items mainly managed by the operation station 1000a are displayed in a display area 3010, and state information items mainly managed by the backup station 1000b are displayed in a display area 3020. Moreover, as the state information items received by the primary system integrated monitoring/control device 60a, all of the state information items having respective category IDs ("SITE1_SYS1_AA," "SITE1_SYS1_AB," and the like) each starting with the "SITE1_SYS1" are collected and displayed in a display area 3011 for the primary system. As the state information items received by the secondary system integrated monitoring/control device 61a, all of the state information items having respective category IDs ("SITE1_SYS2_AA," "SITE1_SYS2_AB," and the like) each starting with the "SITE1_SYS2" are collected and displayed in display area 3012 for the secondary system. Moreover, failure histories included in state information items of the operation station 1000a and starting with "SITE1_" are displayed as a list in a display area 3013. Failure histories included in state information items regarding the backup station 1000b and starting with "SITE2_" are displayed as a list in a display area 3023.

Moreover, for example, assuming a case in which a specific device or specific state information items will be checked, state information items of the operation station 1000a are collected on a monitoring screen 3100 and state information items of the backup station 1000b are collected on a monitoring screen 3200, so that only the state information item of the system to which a specific device of interest or a specific state information item belongs can be displayed, as illustrated in FIG. 7B. Moreover, the monitoring screen 3100 is divided into a display area 3110 where an information item regarding "AA" that is a specific device or a specific state information item is displayed, a display area 3120 where an information item regarding "AB" is displayed, and the like, and state information items regarding "AA" are displayed in a display area 3111 by collecting state information items having respective category IDs ("SITE1_SYS1_AA" and "SITE1_SYS2_AA") each including "SITE1" and "AA". Moreover, events extracted by collecting the state information items having the category IDs ("SITE1_SYS1_AA" and "SITE1_SYS2_AA") each including "SITE1" and "AA"are displayed as a list in a display area 3112. The same applies to "AB" that is a specific device or a specific state information item. State information items regarding "AB" are displayed in a display area 3121 by collecting state information items having respective category IDs ("SITE1_SYS1_AB" and "SITE1_SYS2_AB") each including "SITE1" and "AB". Moreover, events extracted by collecting the state information items having the category IDs ("SITE1_SYS1_AB" and "SITE1_SYS2_AB") each including "SITE1" and "AB" are displayed as a list in a display area 3122.

The monitoring screens illustrated in FIGS. 7A and 7B are each displayed in a switched manner or displayed simultaneously. Moreover, the monitoring screens illustrated in FIGS. 7A and 7B are non-limiting examples, and a monitoring screen can be configured by combining various kinds of state information items in accordance with the operation. Moreover, not only for provision of state information items on monitoring screens but also in notification of state information items by voice or alarm sound output, state information items customized for each operator are provided by defining the details of processing for the sound output, for each category ID or for each specific set of multiple category IDs.

Moreover, both of the monitoring screens illustrated in FIGS. 7A and 7B can be created by using the state information item including the category ID distinguishing a specific device presented by the state information item or distinguishing the configuration of a monitoring/control system such as "SITE1_SYS1_AA" as illustrated in FIG. 6. For such a monitoring screen, specific processing may be defined, and data for the processing may also be defined. For example, as the hierarchy level 4, "ALARM" when an alarm has to be issued, "DTLW" for displaying the received state information item in a detail window, "EVNT" for displaying the received state information item in an event window, and the like may also be defined respectively based on the contents of the received state information item. For example, a state information item indicating that an alarm to be issued from the communication device in the Tokyo station located in Tokyo can be expressed by "TOKYO_MAIN_COM_ALARM" and the like, and a state information item that is from the communication device in the Osaka station located in Osaka and to be displayed in a detail window can be expressed by "OSAKA_MAIN_COM_DTLW" and the like.

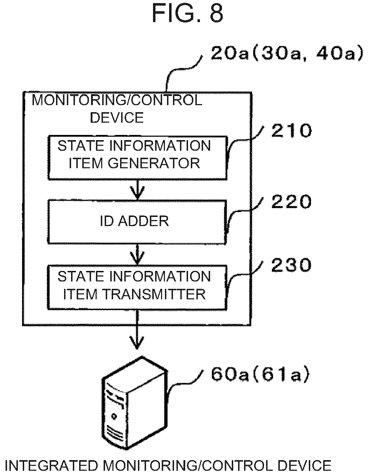

The individual configurations of the operation station 1000a and the backup station 1000b are described below. FIG. 8 is a functional block diagram illustrating the configuration of the monitoring/control device 20a. Although the monitoring/control device 20a is described here, the monitoring/control devices (30a, 40a) within the same operation station are absolutely the same in configuration and operation. Moreover, the monitoring/control devices (20b, 30b, 40b) within the backup station are also absolutely the same in configuration and operation. The monitoring/control device 20a includes a state information item generator 210 that generates the state information item, an ID adder 220 that adds a category ID to the generated state information item, and a state information item transmitter 230 that transmits to the integrated monitoring/control devices (60a, 61a) the state information item to which the category ID is added by the ID adder 220.

The state information item generator 210 generates the state information item indicating the state of the device 10 and the monitoring/control device 20a. Then, the ID adder 220 adds the category ID to the state information item generated by the state information item generator 210. The category ID is determined based, for example as illustrated in FIG. 6, on the distinction between the operation station and the backup station, the distinction as to whether the integrated monitoring/control device to which monitoring data are transmitted is the primary system or the secondary system, and the type of status included in monitoring data.

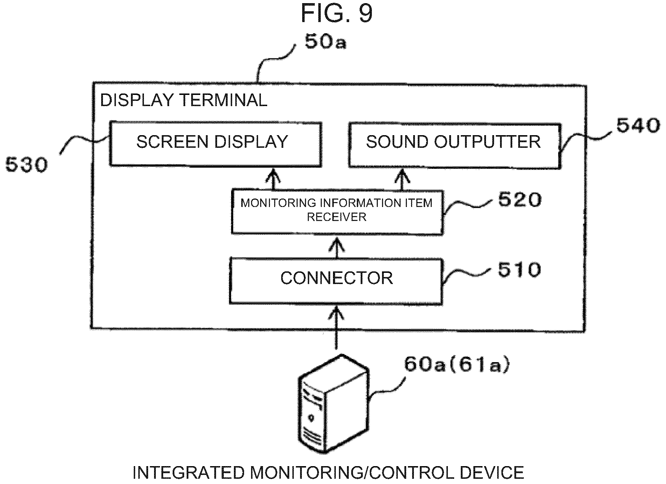

FIG. 9 is a block diagram illustrating the configuration of the display terminal 50a. Although the display terminal 50a is described here, the display terminal 50b is the same in configuration and operation. The display terminal 50a includes a connector 510 that connects to the integrated monitoring/control device (60a or 61a), a monitoring information item receiver 520 that receives from the connected integrated monitoring/control device (60a or 61a) a monitoring information item in which a state information item is in a format of a control signal for controlling display or sound for being provided to the operator, a screen display 530 that displays the monitoring information item on a monitoring screen determined by the integrated monitoring/control device (60a or 61a), and a sound outputter 540 that outputs sound including an alarm with regard to monitoring data.

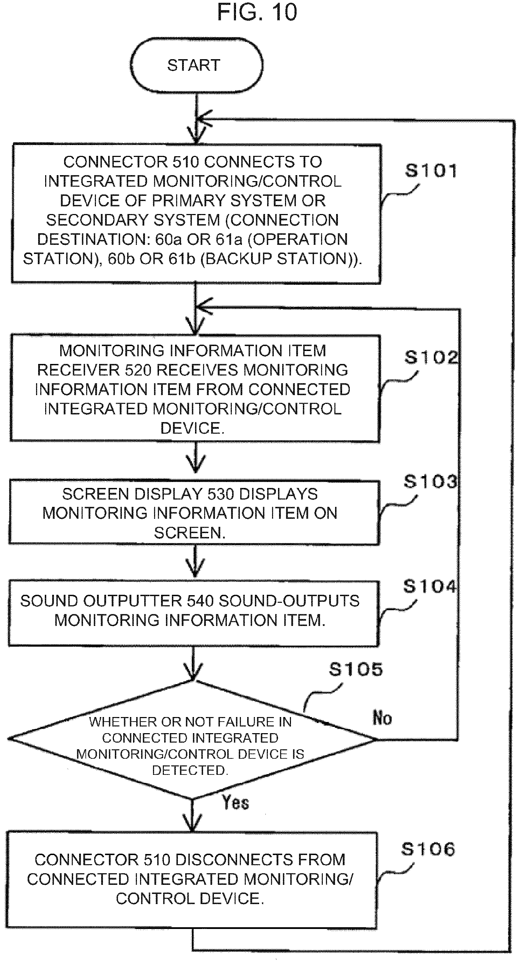

FIG. 10 is a flowchart of the operation of the display terminal 50a. As the display terminal 50a is activated, the connector 510 connects to the integrated monitoring/control device (60a or 61a) (S101) and the display terminal 50a starts to receive the monitoring information item. The monitoring information item receiver 520 receives from the integrated monitoring/control device (60a or 61a) connected to the connector 510 (S102) the monitoring information item in which the state information item is in a format of a control signal of display and/or sound for being provided to the operator. The screen display 530 displays the monitoring information item received by the monitoring information item receiver 520 on a screen (S103). The sound outputter 540 sound-outputs the monitoring information item received by the monitoring information item receiver 520 (Step S104). Here, the screen display 530 and/or the sound outputter 540 is also referred to as a monitoring information item outputter. Whether or not a correct state information item can be received from the integrated monitoring/control device (60a or 61a) within a prescribed time is determined, and it is determined that the reception within a prescribed time is unsuccessful if, for example, the connector 510 detects timeout of the data reception of the monitoring information item from the connected integrated monitoring/control device (60a or 61a) or if the monitoring information item receiver 520 determines that there are abnormal reception data in the monitoring information. Based on such determination, the integrated monitoring/control device (60a or 61a) is determined to have a failure (S105). If no failure is detected in the integrated monitoring/control device (60a or 61a) connected thereto (No in S105), the display terminal 50a continues to receive monitoring information items. If a failure is detected in the integrated monitoring/control device (60a or 61a) connected thereto (Yes in S105), the display terminal 50a disconnects the connector 510 from the integrated monitoring/control device (S106) and starts the operation again from the beginning step of connecting to the integrated monitoring/control device (60a or 61a) (S101).

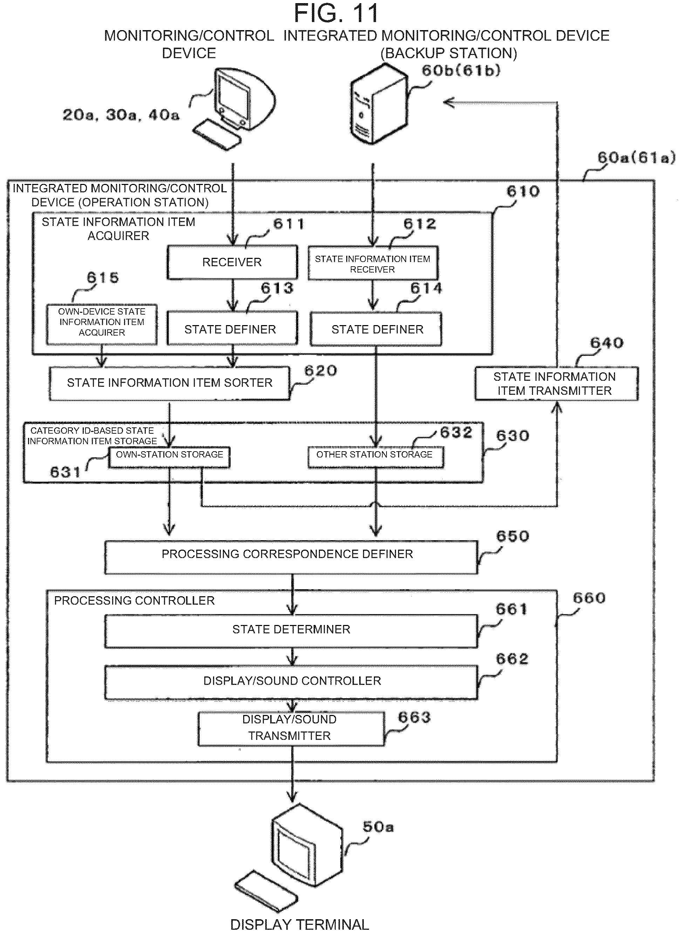

FIG. 11 is a block diagram illustrating the configuration of the integrated monitoring/control device 60a and the integrated monitoring/control device 61a of the operation station 1000a. The integrated monitoring/control device 60a is described here, and the configuration and operation of the integrated monitoring/control device 60b are absolutely the same as those of the integrated monitoring/control device 60a. Moreover, the configuration and operation of each of the integrated monitoring/control device 60b and the integrated monitoring/control device 61b of the backup station 1000b are also absolutely the same as those of the integrated monitoring/control device 60a.

In FIG. 11, the integrated monitoring/control device 60a includes a state information item acquirer 610 that acquires state information items for the individual monitoring/control devices (20a, 30a, 40a) and the integrated monitoring/control device 60a itself installed in the operation station 1000a and state information items for the individual monitoring/control devices (20b, 30b, 40b) and the integrated monitoring/control device 60b installed in the backup station 1000b, a state information item sorter 620 that classifies the acquired state information items based on category ID, a category ID-based state information item storage 630 that stores the state information items classified based on category ID, a state information item transmitter 640 that transmits the acquired category ID-based state information item to the integrated monitoring/control device 60b of the backup station 1000b, a processing correspondence definer 650 that defines, for each state information item, the correspondence between the category ID of the state information item and processing to be executed for the state information item, and a processing controller 660 that controls the processing defined by the processing correspondence definer and determined based on category ID to be executed for the state information item.

The state information item acquirer 610 includes a receiver 611 that receives state information items from the individual monitoring/control devices (20a, 30a, 40a) of the operation station 1000a, a state information item receiver 612 that acquires from the integrated monitoring/control device 60b the state information items for the individual monitoring/control devices (20b, 30b, 40b) and the integrated monitoring/control device 60b of the backup station 1000b, and a state definer 613 corresponding to the receiver 611, and a state definer 614 corresponding to the state information item receiver 612. The state definer 613 and the state definer 614 check the data format and data consistency of the state information item received by the receiver 611 and the state information item receiver 612, respectively. Furthermore, the state information item acquirer 610 includes an own device state information item acquirer 615 that acquires the state information item of the integrated monitoring/control device 60a itself.

The state information item sorter 620 classifies the state information items acquired by the state information item acquirer 610 based on category IDs added to the state information items and stores the state information items in the category ID-based state information item storage 630. Here, state information items regarding the backup station 1000b are received after sorted by the state information item sorter 620 of the integrated monitoring/control device (60b or 61b) installed in the backup station 1000b as described later, and thus, the state information items of the backup station 1000b are directly stored in the category ID-based state information item storage 630 without classification based on category IDs by the state information item sorter 620 of the integrated monitoring/control device 60a.

The category ID-based state information item storage 630 includes an own-station storage 631 that stores state information items of the operation station 1000a acquired by the receiver 611 and the own-device state information item acquirer 615, and an other-station storage 632 that stores state information items of the backup station 1000b acquired by the state information item receiver 612. In the integrated monitoring/control device (60a (61a), 60b (61b)) of each of the operation station 1000a and the backup station 1000b, state information items stored in the own-station storage 631 is the state information items mainly managed by its own station.

Upon a new state information item being stored in the own-station storage 631 of the category ID-based state information item storage 630, the stored state information item is controlled by the processing controller 660 so that the processing defined by the processing correspondence definer 650 is executed. In synchronous with that, the state information item newly stored in the own-station storage 631 is periodically transmitted by the state information item transmitter 640 to the integrated monitoring/control device 60b (61b) of the backup station 1000b. The transmitted state information item is received by the state information item receiver 612 of the integrated monitoring/control device 60b (61b), checked for the data format and data consistency by the processing definer 614 of the integrated monitoring/control device 60b (61b), and stored in the category ID-based state information item storage 630 of the integrated monitoring/control device 60b (61b).

With the same configuration, the same applies to the state information items acquired by the integrated monitoring/control device 60b (61b) of the backup station 1000b from the monitoring/control devices (20b, 30b, 40b) and the integrated monitoring/control device 60b of the backup station 1000b. The state information items acquired from the monitoring/control devices (20b, 30b, 40b) of the backup station 1000b are received by the receiver 611, checked for the data format and data consistency by the state definer 613, and are then classified by the state information item sorter 620. The state information item acquired by the own device state information item acquirer 615 that acquires the state information of the integrated monitoring/control device 60b itself is also classified by the state information item sorter 620, stored in the category ID-based state information item storage 630, and then transmitted by the state information item transmitter 640 to the integrated monitoring/control device 60a (61a) of the operation station 1000a. The state information items of the backup station 1000b transmitted as described above are the state information items received by the above-described state information item receiver 612.

The processing correspondence definer 650 defines category ID-corresponding processing that is executed using a state information item for the category ID included in the state information item or for a combination of category IDs. As for the correspondence between the category ID and the processing, different individual processing may be assigned to each category ID, or category IDs are classified by the attributes of one or multiple hierarchy levels constituting a category ID and different individual processing may be assigned to each classified category ID, as described above. Examples of the processing definition include the following cases: for the category ID including three hierarchy levels illustrated in FIG. 5, processing to be executed for state information items each having a category ID including the third hierarchy level (2010c) of "AA" is defined; processing to be executed for state information items each having a category ID including "SITE1_SYS1" as the combination of the first hierarchy level (2010a) and the second hierarchy level (2010b) is defined, and the like. Moreover, processing may be assigned to each group formed by selecting any category IDs or processing may be assigned to a category ID to which a specific hierarchy level is added. When processing assigned to a category ID by the processing correspondence definer 650 is to display a screen to the operator, the processing correspondence definer 650 defines the details of the processing such as display including monitoring screen display, sound output, and or the like for each category ID.

The processing controller 660 performs control so that the processing defined by the processing correspondence definer 650 for each category ID is executed for the state information items classified based on category IDs. The processing controller 660 includes a state determiner 661 that determines whether a state information item of each category ID falls into a predetermined state such as failure, alarm, and/or the like, a display/sound controller 662 that generates, based on the state determined by the state determiner 661, control signals for display output and/or sound output of the state information items at the position of a display area defined by the processing correspondence definer 650, and a display/sound transmitter 663 that transmits to the display terminal 50a monitoring information items that are the control signals generated by the sound controller 662.

In the examples of FIGS. 7A and 7B, for a state information item having the category ID "SITE1_SYS1_AA," display in the display areas 3011 and 3013 in FIG. 7A and display in the display areas 3111 and 3112 in FIG. 7B are defined by the processing correspondence definer 650. The state determiner 661 and the display/sound controller 662 perform control so that each processing defined by the processing correspondence definer 650 is executed for the state information items. The state determiner 661 determines a specific event such as the occurrence of a failure or the like based on state information items accumulated under the category ID. Then, the display/sound controller 662 generates control signals for displaying the state information items on the display terminal 50a using a display component determined for each category ID, for example, as illustrated in FIGS. 7A and 7B at the determined position of a display area. Here, for example, a display attribute such as blinking in response to the occurrence of a failure or the like may be set for each display component based on the results of determination by the state determiner 661. Moreover, when a display item is a start button, whether or not a button is already present for the same device in the display area corresponding to the category ID may be determined and if absent, additional display may be performed. Moreover, a display component may be determined for each category ID, or a hierarchy level ID of a hierarchy level indicating a display component to a category ID so that the category ID itself indicates the display component.

Furthermore, the display/sound controller 662 creates, for each category ID, an instruction to make the display terminal 50a execute the details of processing details such as display, sound output, and the like based on the processing results of the processing correspondence definer 650 and the state determiner 661. The processing correspondence definer 650 defines and presents processing corresponding to a category ID for all category IDs under which the state information items are accumulated in the category ID-based state information item storage 630. The processing controller 660 executes operations of the state determiner 661 and the display/sound controller 662 for all category IDs under which the state information items are accumulated in the category ID-based state information item storage 630. The control signals generated by the display/sound controller 662 are grouped in units of processing of simultaneous display or sound output such as based on monitoring screen, and are transmitted by the display/sound transmitter 663 to the display terminal 50a.

As described above, in the integrated monitoring/control system according to Embodiment 1 of the present disclosure, state information items each having a category ID indicating an attribute that is multiply-classified by multiple classifications are transmitted by a monitoring/control device, and the integrated monitoring/control device defines processing correspondingly for each category ID or for each combination of multiple category IDs to provide the state information items, whereby the state information items can be provided flexibly in accordance with the operation of the integrated monitoring/control device.

Moreover, in the integrated monitoring/control system according to Embodiment 1 of the present disclosure, the category ID added to the state information item includes the hierarchy level IDs of hierarchy levels classifying the position of a configuration the state information item relates to in the entire monitoring/control system such as the operation station, the backup station, or the like each constituting a multiplexed system, whereby when the configuration is changed in part, it is sufficient to modify the category ID to include the hierarchy level ID of a hierarchy level including the configuration of the changed part. In other words, it is possible to obtain an integrated monitoring/control device and an integrated monitoring/control system capable of easily performing processing in a form corresponding to requirements for each state information item including a state information item managed by another station in a system that performs monitoring and control using the integrated monitoring/control devices of multiple stations.

Furthermore, the integrated monitoring/control system according to Embodiment 1 of the present disclosure is configured to synchronize the state information items acquired by the integrated monitoring/control devices therebetween, whereby the illustrated state information items are consistent and unified state information items are provided on any of the integrated monitoring/control devices.

Moreover, in the above description, an example is described in which the processing correspondence definer 650 is used to define the correspondence between the category ID included in state information item and the processing of display and/or sound output executed for the state information item, and the processing controller 660 executes the process of display and/or sound output defined and presented by the processing correspondence definer 650. The processing defined by the processing correspondence definer 650 and controlled for execution by the processing controller 660 is not limited to display and/or sound output, and is applicable to, for example, processing to treat the state information item by tabulation, analysis, and the like.

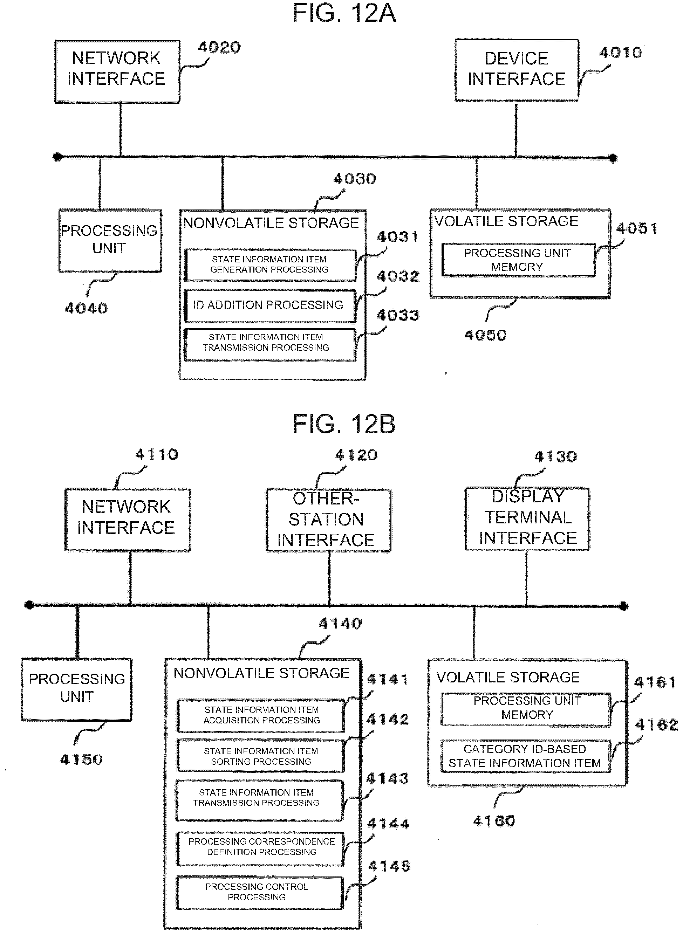

FIGS. 12A is diagram illustrating an example of the hardware configuration of the monitoring/control device and 12B is a diagram illustrating an example of the hardware configuration of the integrated monitoring/control device according to Embodiment 1 of the present disclosure. The monitoring/control device and the integrated monitoring/control device of the present disclosure can each be implemented by programs on a computer. FIG. 12A is an example of the configuration of the monitoring/control device. A monitoring/control device 20 (20a, 20b) includes a device interface 4010 that is connected to a device 10 (10a, 10b) and detects the state of the device 10 (10a, 10b), a network interface 4020 connected to a network (70a, 70b), a nonvolatile storage 4030 that stores programs, a processing unit 4040 that executes the programs stored in the nonvolatile storage 4030, and a volatile storage 4050 used by the processing unit 4040 during execution of the programs. The nonvolatile storage 4030 stores state information item generation processing 4031, ID addition processing 4032, and state information item transmission processing 4033, which are steps of a program and are loaded on a processing unit memory 4051 of the volatile storage 4050 and executed by the processing unit 4040 so as to realize the functions as the state information item generator 210, the ID adder 220, and the state information item transmitter 230, respectively.

FIG. 12B is an example of the configuration of the integrated monitoring/control device. The integrated monitoring/control device 60 (60a, 60b) and the integrated monitoring/control device 61 (61a, 61b) each include a network interface 4110 connected to a network (70a, 70b), an other-station interface 4120 connected to another station, a display terminal interface 4130 connected to a display terminal, a nonvolatile storage 4140 that stores programs, a processing unit 4150 that executes the programs stored in the nonvolatile storage 4140, and a volatile storage 4160 used by the processing unit 4040 during execution of the programs. The other station is the backup station 1000b from the viewpoint of the operation station 1000a, and is the operation station 1000a from the viewpoint of the backup station 1000b. The nonvolatile storage 4140 stores state information item acquisition processing 4141, state information item sorting processing 4142, state information item transmission processing 4143, state correspondence definition processing 4144, and processing control processing 4145, which are steps of a program and are loaded on a processing unit memory 4161 of the volatile storage 4160 and executed by the processing unit 4150 so as to realize the functions as the state information item acquirer 610, the state information item sorter 620, the state information item transmitter 640, the processing correspondence definer 650, and the processing controller 660. Category ID-based state information items obtained by classifying the state information items received by the integrated monitoring/control device based on category IDs are stored in a category ID-based state information item 4162 of the volatile storage 4160, respectively. Moreover, a display/sound output notifier 660, a state change detector 670, an output timing adjuster 680, and an NTP time synchronizer 690 of the integrated monitoring/control device in Embodiments 2, 3, and 4 described later are each stored as a program in the nonvolatile storage 4140 and executed by the processing unit 4150. Here, the configurations illustrated in FIGS. 12A and 12B are illustrative examples and any changes and modifications can be made.

### Embodiment 2

In Embodiment 1, the integrated monitoring/control device 60a (61a) that is the operation station transmits the state information items of the operation station 1000a to the integrated monitoring/control device 60b (61b) that is the backup station 1000b, and the integrated monitoring/control device 60b (61b) that is the backup station transmits the state information items of the backup station 1000b to the integrated monitoring/control device 60a (61a) that is the operation station, thereby sharing the state information items. Although the state information items are shared, inconsistency may occur between the state information items being displayed on the display terminal 50a of the operation station and the state information items being displayed on the display terminal 50b of the backup station because of the timing of transmission by the display/sound transmitter 660 to the display terminal (50a, 50b).

In Embodiment 2, in addition to the sharing of the state information items by the respective integrated monitoring/control devices (60a (61a), 60b (61b)) of the operation station 1000a and the backup station 1000b, the timing of display output to the display terminal (50a, 50b) is synchronized so that the provided state information items are consistent between the display terminal 50a of the operation station 1000a and the display terminal 50b of the backup station 1000b. In Embodiment 2, the operation station 1000a includes integrated monitoring/control devices (60c, 61c) of the operation station 1000a in place of the integrated monitoring/control devices (60a, 61a) according to Embodiment 1 and the backup station 1000b includes integrated monitoring/control devices (60d, 61d) of the backup station 1000b in place of the integrated monitoring/control devices (60b, 61b) according to Embodiment 1.

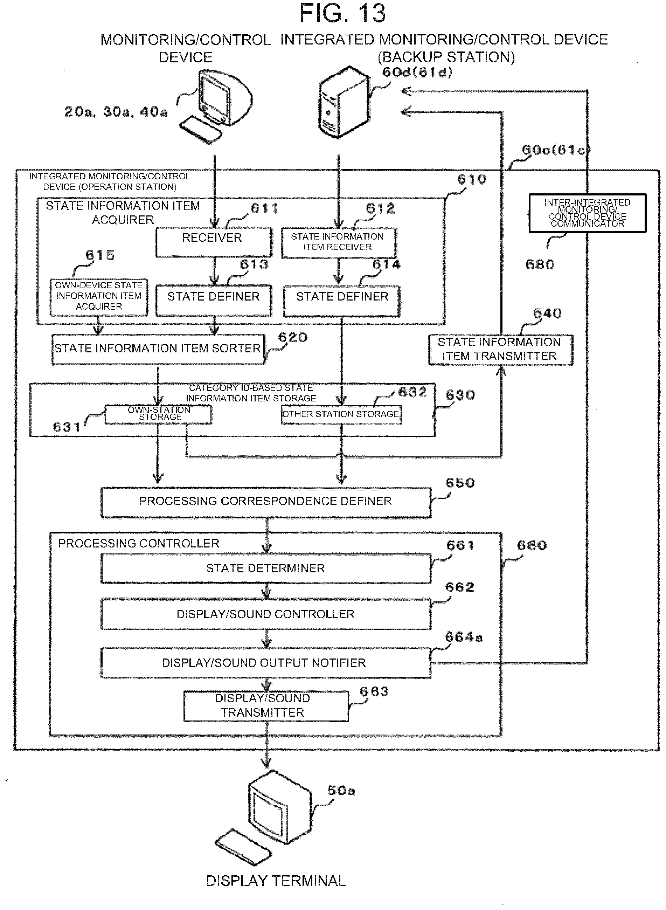

FIG. 13 is a diagram illustrating the configuration of the integrated monitoring/control device 60c (61c) of the operation station according to Embodiment 2 of the present disclosure. In FIG. 13, the integrated monitoring/control device 60c (61c) of the operation station 1000a (its own station) includes an inter-integrated monitoring/control device communicator 680 that transmits/receives information items to/from the integrated monitoring/control device 60d (61d) of the backup station 1000b (the other station), and a display/sound output notifier 664a that notifies the integrated monitoring/control device 60d (61d) of the backup station 1000b (the other station) by means of the inter-integrated monitoring/control device communicator 680 to the effect that display/sound is output when the control signals generated by the display/sound controller 662 are output to the display/sound transmitter 663. The integrated monitoring/control device 60c (61c) has the same configuration as the integrated monitoring/control device 60a (61a) according to Embodiment 1 except for including the display/sound output notifier 664a and the inter-integrated monitoring/control device communicator 680. The display/sound output notifier 664a is a processing state transmitter that transmits a processing state notice that indicates the state of processing at its own station to the integrated monitoring/control device 60d (61d) of the other station by means of the inter-integrated monitoring/control device communicator 680.

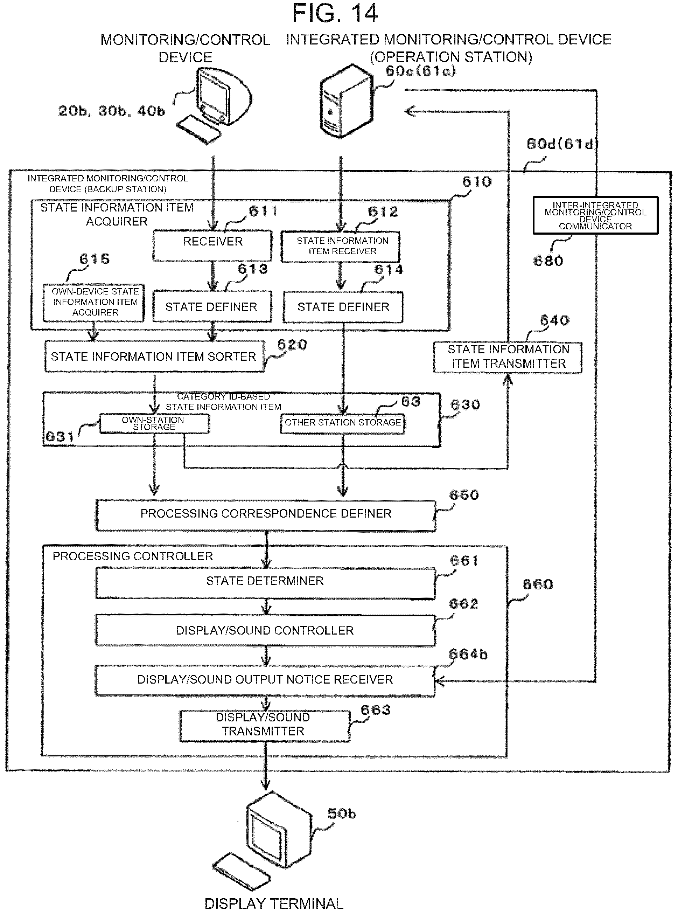

FIG. 14 is a diagram illustrating the configuration of the integrated monitoring/control device 60d (61d) of the backup station according to Embodiment 2 of the present disclosure. In FIG. 14, the integrated monitoring/control device 60d (61d) of the backup station 1000b (its own station) includes an inter-integrated monitoring/control device communicator 680 that transmits/receives information items to/from the integrated monitoring/control device 60c (61c) of the operation station 1000a (the other station), and a display/sound output notice receiver 664b that, in synchronous with the notice from the display/sound output notifier 664a of the integrated monitoring/control device 60c (61c) that is received by means of the inter-integrated monitoring/control device communicator 680, outputs to the display/sound transmitter 663 the control signals generated by the display/sound controller 662. The integrated monitoring/control device 60d (61d) has the same configuration as that of the integrated monitoring/control device 60b (61b) according to Embodiment 1 except for including the display/sound output notice receiver 664b and the inter-integrated monitoring/control device communicator 680. The display/sound output notice receiver 664b is a processing-state waiting processor that waits for a processing state notice from the integrated monitoring/control device 60c (61d) of the other station and executes processing as the processing state notice is received by means of the inter-integrated monitoring/control device communicator 680.

Moreover, although not illustrated in FIGS. 13 and 14, the integrated monitoring/control device 60c (61c) of the operation station 1000a also includes the display/sound output notice receiver 664b and the integrated monitoring/control device 60d (61d) of the backup station 1000b also includes the display/sound output notifier 664a. This is because the roles of the operation station 1000a and the backup station 1000b are switched in the event that the control by the operation station 1000a is disabled due to a disaster or the like; therefore, the operation station 1000a is required to also have the functions of the backup station 1000b and the backup station 1000b is required to also have the functions of the operation station 1000a. While the integrated monitoring/control device 60c (61c) is the operation station, the display/sound output notifier 664a operates and the display/sound output notice receiver 664b is on standby or at rest. When the integrated monitoring/control device 60c (61c) shifts to the backup station, the display/sound output notifier 664a stops operating and becomes on standby or at rest and the display/sound output notice receiver 664b operates.

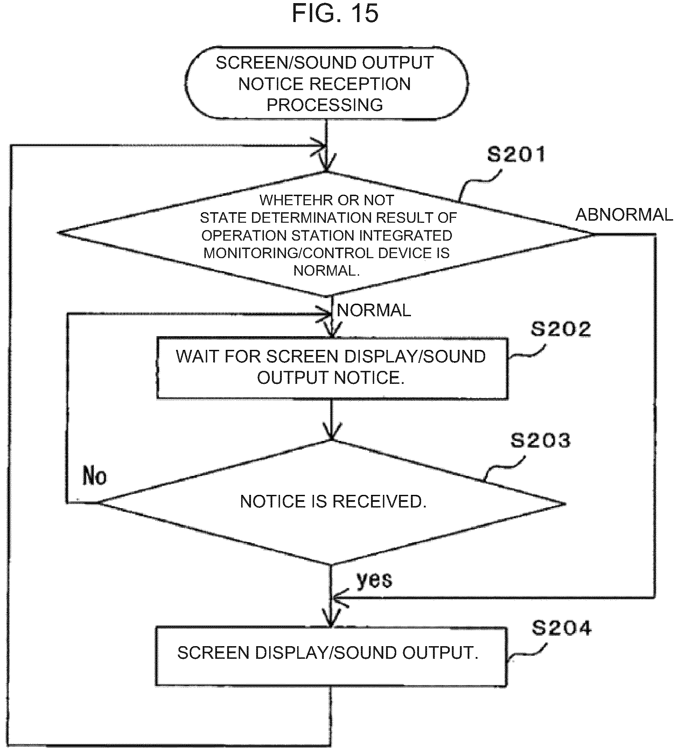

FIG. 15 illustrates operation of the display/sound output notice receiver 664b of the integrated monitoring/control device 60d (61d) of the backup station 1000b. Operation of the display/sound output notice receiver 664b of the integrated monitoring/control device 60d is described below; however, the same applies to the display/sound output notice receiver 664b of the integrated monitoring/control device 61d. The display/sound output notice receiver 664b determines the state of the integrated monitoring/control device 60c (61c) of the operation station 1000a (5201) and if determining that there is an abnormality (the branch "ABNORMAL" of 5201), the display/sound output notice receiver 664b outputs to the display/sound transmitter 663 the control signals generated by the display/sound controller 662 as they are (S204). If the integrated monitoring/control device 60c (61c) of the operation station 1000a is determined to be normal (the branch "NORMAL" of S201), the display/sound output notifier 664b waits for a notice of display/sound output from the display/sound output notifier 664a of the integrated monitoring/control device 60c (S202 and the branch "No" of S203). As the notice is received from the display/sound output notifier 664a of the integrated monitoring/control device 60c by means of the inter-integrated monitoring/control device communicator 680 (the branch "Yes" of S203), the display/sound output notice receiver 664b of the integrated monitoring/control device 60d instructs through the display/sound transmitter 663 the display terminal 50b to perform screen display/sound output.

The sound/display output to the display terminal 50b from the display/sound transmitter 663 in the integrated monitoring/control devices 60d and 61d is executed in time with a notice transmitted by the display/sound output notifier 664a of the integrated monitoring/control devices 60c and 61c in synchronous with the sound/display output to the display terminal 50a. Thus, the display on the display terminal 50a and the display on the display terminal 50b can be updated in synchronous with each other. This enables the display terminal 50a of the operation station 1000a and the display terminal 50b of the backup station 1000b to provide the state information items in a unified manner including the display timing and in a format customized in accordance with the operation.

Here, in the above example, the display/sound output notifier 664a of the integrated monitoring/control device 60c (61c) of the operation station 1000a notifies the integrated monitoring/control device 60d (61d) of the backup station 1000b of the state of processing in time with the display/sound output executed by the processing controller 660. However, in regard to the state for which the processing controller 660 of the integrated monitoring/control device 60d (61d) of the backup station 1000b should execute processing in synchronous, the display/sound output notifier 664a may notify the integrated monitoring/control device 60d (61d) of the backup station 1000b of a state of something other than processing as a processing state notice. For example, if the processing controller 660 is periodically activated, the activation timing may be notified.

### Embodiment 3

In Embodiment 2, in order for the display to be updated with the same timing on the display terminal 50a of the operation station 1000a and on the display terminal 50b of the backup station 1000b, a notice of is given by the integrated monitoring/control device 60c (61c) of the operation station 1000a transmits a notice for display/sound output to the integrated monitoring/control device 60d (61d) of the backup station 1000b. However, if significantly high speed communication is available between the operation station 1000a and the backup station 1000b, the display on the display terminal 50a of the operation station 1000a and the display on the display terminal 50b of the backup station 1000b can be updated at the same timing by transmitting the category ID-based state information items transmitted from the operation station 1000a to the backup station 1000b or from the backup station 1000b to the operation station 1000a.

In Embodiment 3, the operation station 1000a includes integrated monitoring/control devices (60e, 61e) of the operation station 1000a in place of the integrated monitoring/control devices (60a, 61a) according to Embodiment 1 and the backup station 1000b includes integrated monitoring/control devices (60f, 61f) of the backup station 1000b in place of the integrated monitoring/control devices (60b, 61b) according to Embodiment 1.

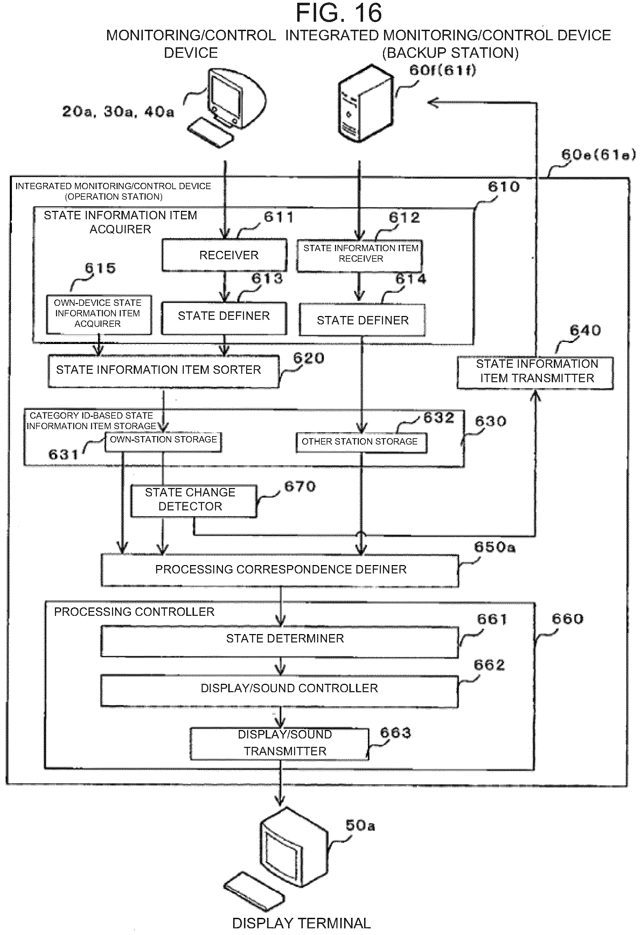

FIG. 16 is a diagram illustrating the configuration of the integrated monitoring/control device 60e (61e) of the operation station 1000a according to Embodiment 3 of the present disclosure. In the integrated monitoring/control device 60e (61e), for the state information items stored in the own-station storage 631 of the category ID-based state information item storage 630 (the state information items each having a category ID starting with "SITE1_"), a state change detector 670 detects the presence/absence of change in the state information items for each category ID. Only when the state change detector 670 detects change in a state information item, the integrated monitoring/control device 60e (61e) transmits the state information items of the category ID under which there is change in the state information items to the integrated monitoring/control device 60f (61f) of the backup station 1000b by means of the state information item transmitter 640. Moreover, for the category ID under which change in the state information item is detected, a notice of the change in the state information item is given to the processing controller 660 in synchronous with transmission of the state information item.

For the state information item stored in the own-station storage 631 of the category ID-based state information item storage 630 (the state information item having the category ID starting with "SITE1_"), when change in the state information item is notified by the state change detector 670, a processing correspondence definer 650a presents definition of process details, such as display including monitoring screen display and sound output, corresponding to the notified category ID. Moreover, for the state information item stored in the other-station storage 632 of the category ID-based state information item storage 630 (the state information item having the category ID starting with "SITE2_"), as a new state information item received by the state information item receiver 612 is stored, the processing correspondence definer 650a presents definition of process details, such as display including monitoring screen display and sound output, corresponding to the category ID of the state information item newly received and stored. For the state information item stored in the own-station storage 631 and subjected to change and the sent state information item of the other station (the backup station 1000b), for which corresponding processing is presented by the processing correspondence definer 650a, the control processor 660 controls execution of the processing presented by the processing correspondence definer 650a.

In FIG. 16, the above operation is described with regard to the integrated monitoring/control device 60e (61e) of the operation station 1000a. Exactly the same applies to the integrated monitoring/control device 60f (61f) of the backup station 1000b. In the integrated monitoring/control device 60f (61f), for the state information item stored in the own-station storage 631 of the category ID-based state information item storage 630 (the state information item having the category ID starting with "SITE2_"), the state change detector 670 detects the presence/absence of change in the state information item based on category ID. Only when there is change in the state information item, the state information item of the category ID under which there is change in the state information item is transmitted by the state information item transmitter 640 to the integrated monitoring/control device 60e (61e) that is the operation station 1000a. Moreover, for the category ID under which change in the state information item is detected, a notice of change in the state information item is given to a processing correspondence definer 650b in synchronous with transmission of the state information item.

For the state information items stored in the own-station storage 631 of the category ID-based state information item storage 630 (the state information items each having a category ID starting with "SITE2_"), when a notice of change in the state information item is provided by the state change detector 670, the processing correspondence definer 650b presents the definition of processing details, such as display including monitoring screen display, sound output, and the like corresponding to the notified category ID. Moreover, for the state information items stored in the other-station storage 632 of the category ID-based state information item storage 630 (the state information items each having a category ID starting with "SITE1_"), upon a new state information item received by the state information item receiver 612 being stored, the definition of processing details, such as display including monitoring screen display, sound output, and the like corresponding to the category ID of the state information item newly received and stored is presented. For the state information item stored in the own-station storage 631 and subjected to change and the transmitted state information item of the other station (the operation station 1000b), for which corresponding processing is presented by the processing correspondence definer 650b, the control processor 660 performs control so that the processing presented by the processing correspondence definer 650b is executed.

In regard to the state information items of the operation station 1000a, as the state change detector 670 of the integrated monitoring/control device 60e (61e) detects change, the integrated monitoring/control device 60e (61e) and the integrated monitoring/control device 60f (61f) each update display regarding the category ID under which the change is detected, and thus unified state information items updated with the same timing can be provided on the display terminal 50a of the operation station 1000a and the display terminal 50b of the backup station 1000b.

In regard to the state information item of the backup station 1000a, as the state change detector 670 of the integrated monitoring/control device 60f (61f) detects change, the integrated monitoring/control device 60f (61f) and the integrated monitoring/control device 60e (61e) each update display regarding the category ID under which the change is detected, whereby the state information item is updated with the same timing on the display terminal 50a of the operation station 1000a and the display terminal 50b of the backup station 1000b. Thus, it is possible to provide unified state information items on the display terminals (50a, 50b) of all integrated monitoring/control devices.

### Embodiment 4

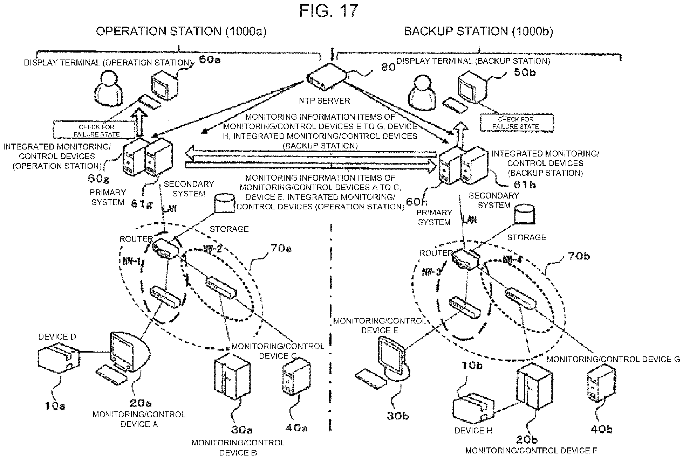

FIG. 17 is a diagram illustrating the entire integrated monitoring/control system according to Embodiment 4 of the present disclosure. In Embodiment 4, the operation station 1000a includes integrated monitoring/control devices (60g, 61g) of the operation station 1000a in place of the integrated monitoring/control devices (60a, 61a) according to Embodiment 1 and the backup station 1000b includes integrated monitoring/control devices (60h, 61h) of the backup station 1000b in place of the integrated monitoring/control devices (60b, 61b) according to Embodiment 1. In FIG. 17, the integrated monitoring/control devices (60g, 60h, 61g, 61h) are each connected to an NTP server 80 that provides time information.

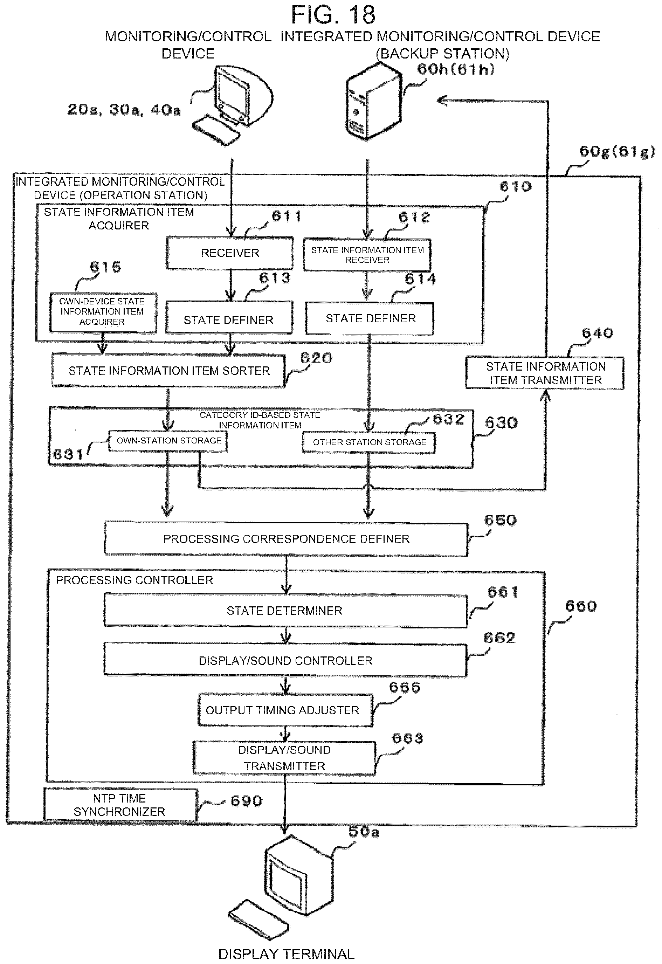

FIG. 18 is a diagram illustrating the configuration of the integrated monitoring/control devices 60g (61g) and 60h (61h) according to Embodiment 4 of the present disclosure. The integrated monitoring/control devices 60g (61g) and 60h (61h) are each time-synchronized with the NTP server 80. The same timing is transmitted by an NTP time synchronizer 690 to output timing adjusters 665 in all integrated monitoring/control devices at times such as just on every second. In other words, the time managed by the NTP server 80 is the reference time and the integrated monitoring/control devices (60g, 60h, 61g, 61h) each have a reference time clock outputting the synchronized reference time.

Upon receiving of control signals for the display terminal (50a, 50b) from the display/sound controller 662, the output timing adjuster 665 once stores the control signals in the internal buffer without outputting the control signals as they are to the display/sound transmitter. The output timing adjusters 665 of all integrated monitoring/control devices (60g, 60h, 61g, 61h) are in the state of being time-synchronized by the NTP time synchronizer 690, and transmit the control signals for the display terminals (50a, 50b) to the display/sound transmitter 663. In this way, the display is updated on the display terminals (50a, 50b) with the same timing from each of the integrated monitoring/control devices (60g, 60h). In this way, unified state information items updated with the same timing can be provided on the display terminal 50a of the operation station 1000a and the display terminal 50b of the backup station 1000b.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

10a, 10b Device
20a, 20b, 30a, 30b, 40a, 40b Monitoring/control device
50a, 50b Display terminal
60a, 60b, 60c, 60d, 60e, 60f, 60g, 60h Integrated monitoring/control device
61a, 61b, 61c, 61d, 61e, 61f, 61g, 61h Integrated monitoring/control device
70a, 70b Network
80 NTP server
210 State information item generator
220 ID adder
230 State information item transmitter
510 Connector
520 Monitoring information item receiver
530 Screen display
540 Sound outputter
610 State information item acquirer
611 Receiver
612 State information item receiver
613, 614 Processing definer
615 Own device state information item acquirer
620 State information item sorter
630 Category ID-based state information item storage
640 State information item transmitter
650, 650a Processing correspondence definer
660 Processing controller
661 State determiner
662 Display/sound controller
663 Display/sound transmitter
664a Display/sound output notifier
664b Display/sound output notice receiver
665 Output timing adjuster
670 State change detector
680 Inter-integrated monitoring/control device communicator
690 NTP time synchronizer
1000a Operation station
1000bBackup station
2000 Category ID
2010a, 2010b, 2010c Hierarchy level ID
3000, 3100, 3200 Monitoring screen
4010 Device interface
4020, 4110 Network interface
4030, 4140 Nonvolatile storage
4040, 4150 Processing unit
4050, 4160 Volatile storage
4120 Other station interface
4130 Display terminal interface

## Claims

1. An integrated monitoring/control device for monitoring/controlling multiple monitoring/control devices, comprising:
a processing correspondence definer to define, for a category ID included in a state information item indicating a state of the monitoring/control devices, devices monitored by the monitoring/control devices, the integrated monitoring/control device, and another integrated monitoring/control device different from the integrated monitoring/control device, category ID-corresponding processing that is processing executed using the state information item;
a receiver to receive the state information item transmitted by the monitoring/control devices;
a state information item transmitter to transmit the state information item managed by the integrated monitoring/control device to the other integrated monitoring/control device;
a state information item receiver to receive the state information item transmitted and managed by the other integrated monitoring/control device; and
a processing controller to perform control so that the processing defined by the processing correspondence definer for the category ID included in the state information item is executed for the state information item.

2. The integrated monitoring/control device according to claim 1, wherein
the state information item comprises a data part and the category ID indicating an attribute of the data part.

3. The integrated monitoring/control device according to claim 1 or 2, further comprising:
an inter-integrated monitoring/control device communicator to transmit/receive information items to/from the other integrated monitoring/control device;
a processing state transmitter to transmit a processing state notice that is a processing state of the integrated monitoring/control device to the other integrated monitoring/control device by mean of the inter-integrated monitoring/control device communicator; and
a processing-state waiting processor to wait for another processing state notice that is a processing state of the other integrated monitoring/control device from the other integrated monitoring/control device and execute processing upon reception of the other processing state notice through the inter-integrated monitoring/control device communicator.

4. The integrated monitoring/control device according to any one of claims 1 to 3, further comprising:
a state information item storage to store the state information item; and
a state change detector to detect change in the state information item managed by the integrated monitoring/control device from the state information item stored in the state information item storage.

5. The integrated monitoring/control device according to any one of claims 1 to 3, further comprising:
a reference time clock to output a reference time synchronized between the integrated monitoring/control device and the other integrated monitoring/control device.

6. An integrated monitoring/control system comprising multiple monitoring/control devices and multiple integrated monitoring/control devices for monitoring/controlling the multiple monitoring/control devices, wherein
the multiple monitoring/control devices generate a state information item indicating a state of a device to be monitored or their own state and including a category ID and transmit the generated state information item to the integrated monitoring/control devices, and
the multiple integrated monitoring/control devices include:
a processing correspondence definer to define, for a category ID included in a state information item indicating a state of any of the monitoring/control devices, devices monitored by the monitoring/control devices, and the integrated monitoring/control device of its own station or another station, a category ID-corresponding process that is processing executed using the state information item;
a receiver to receive the state information item from the monitoring/control devices;
a state information item transmitter to transmit the state information item managed by the integrated monitoring/control device of its own station to the integrated monitoring/control device of the other station;
a state information item receiver to receive the state information item transmitted by the integrated monitoring/control device of the other station and managed by the integrated monitoring/control device of the other station; and
a processing controller to perform control so that the state information item of the processing defined by the processing correspondence definer for the category ID included in the state information item.

7. The integrated monitoring/control system according to claim 6, wherein
the state information item includes a data part and the category ID indicating an attribute of the data part.

8. The integrated monitoring/control system according to claim 6 or 7, further comprising a display terminal, wherein
the display terminal comprises:
a connector to connect to the integrated monitoring/control devices;
a monitoring information item receiver to receive a monitoring information item generated by transforming the state information item from the integrated monitoring/control devices via the connector; and
a monitoring information item outputter to output the monitoring information item received by the monitoring information item receiver, and
the display terminal disconnects from the integrated monitoring/control device that is connected to the connector when the connector detects timeout of data reception of the monitoring information item from the integrated monitoring/control device or the monitoring information item receiver detects abnormal reception data in the monitoring information item.
